# EUROPEAN PATENT SPECIFICATION

(11) **EP 4 209 760 B1**
(45) Date of publication and mention of the grant of the patent: **06.08.2025**
(21) Application number: 22150815.3
(22) Date of filing: 10.01.2022
(51) Int. Cl.: G01F 23/2962, G01F 23/296, G01N 29/22, G01N 29/24, G01N 29/32, G01N 29/024

(54) **ULTRASONIC LIQUID SENSING TRANSDUCER AND METHOD FOR PRODUCING SUCH**
ULTRASCHALL-FLÜSSIGKEITSSENSORWANDLER UND VERFAHREN ZU SEINER HERSTELLUNG
TRANSDUCTEUR ULTRASONIQUE DE DÉTECTION DE LIQUIDE ET SON PROCÉDÉ DE PRODUCTION

(43) Date of publication of application: 12.07.2023
(73) Proprietor: Elmos Semiconductor SE, 44227 Dortmund (DE)
(72) Inventor: WU, Nai Chang, 320014 Taoyuan City (TW); LI, I Chan, 235031 New Taipei City (TW); KAO, Ming Yang, 235008 New Taipei City (TW)
(74) Representative: Tautz & Schuhmacher

(56) References cited:
- EP-A1- 2 638 861
- WO-A1-2014/197504
- DE-B3- 102019 104 093

## Description

Provided are an ultrasonic liquid sensing transducer, an ultrasonic liquid level sensing system and a method for producing an ultrasonic liquid sensing transducer. The embodiments are, thus, related to devices for sensing a liquid level and/or a fluid flow and/or a concentration of a component of the liquid.

Ultrasonic liquid sensing transducers (ULSTs) are widely used for measuring the level of a liquid, a flow rate of a fluid and/or the concentration of components of the liquid. Such devices are based on measuring a lapsed time between the generation of an ultrasonic signal and the received echo of said generated ultrasonic signal. Based on the measured time of flight and a predetermined velocity of ultrasonic signals in the liquid or fluid to be sensed, a distance may be determined, which may correspond to a level of the liquid. The ultrasonic transducer may be operated by an integrated circuit (IC), such as an IC of the type ELMOS 703.15/25, which includes functions of a time-to-digital converter and suitable functions for measurements based on the time-of-flight principle with picosecond accuracy. DE 10 2019 104093 B3 describes a conventional ultrasonic liquid sensing transducer.

The ultrasonic signal may be generated by a piezoelectric element provided in the ultrasonic liquid sensing transducer, which is often mounted on a supporting structure and adapted to emit ultrasonic waves into a direction facing away from the supporting structure. However, a part of the ultrasonic waves generated by the piezoelectric element usually propagate along the opposite direction and are reflected and/or scattered by the supporting structure, which often leads to an undesired echo signal from the back side of the piezoelectric element and, hence, to a disturbing artefact. In some cases the artefact resulting from the signal reflected from the back direction may even be stronger than the actual signal to be measured from a reflection in forward direction.

It is, thus, desirable to provide an ULST having less measurement artefacts and an improved signal quality.

This problem is solved by an ultrasonic liquid sensing transducer, an ultrasonic liquid level sensing system and a method for producing an ultrasonic liquid sensing transducer having the features of the respective independent claim. Optional embodiments and features are subject-matter of the dependent claims and the description.

An ultrasonic liquid sensing transducer is provided, comprising a rigid supporting frame and a piezoelectric element mounted on the supporting frame. The supporting frame is adapted to support a peripheral section of the piezoelectric element and to provide a void overlapping with a central section of the piezoelectric element.

Further, an ultrasonic liquid level sensing system is provided comprising at least one ultrasonic liquid sensing transducer according to any one of the preceding claims.

Yet further, a method for producing an ultrasonic liquid sensing transducer is provided. The method comprises a step of providing a rigid supporting frame having a first surface and a second surface. The supporting frame further has a recess and a frame structure at least partly surrounding the recess. The method further comprises a step of attaching a first part of a housing to the second surface of the supporting frame such that the first part of the housing forms a boundary surface overlapping with the recess of the supporting frame. Moreover, the method comprises a step of arranging a piezoelectric element with its back surface at the first surface of the supporting frame such that the frame structure of the supporting frame supports a peripheral section of the piezoelectric element and the recess of the supporting frame overlaps with a central section of the piezoelectric element, wherein the boundary surface of the first part of the housing, the back surface of the piezoelectric element and the supporting frame enclose a void extending from the back surface of the piezoelectric element to the boundary surface of the first part of the housing. In addition, the method comprises a step of providing a second part of the housing enclosing the piezoelectric element, the first part of the housing and at least a part of the supporting frame.

An ultrasonic liquid sensing transducer is an ultrasonic transducer for liquid sensing applications, such as measuring a level of a liquid and/or a fluid flow and/or a concentration of a constituent or component of a liquid, such as a salt concentration of water. The ultrasonic liquid sensing transducer is, thus, to be adapted to be operated in a wet environment and has to exhibit suitable properties regarding ingress protection and chemical resistance. The ULST may operate at a central frequency of 2 MHz, i.e. the frequency of the ultrasonic waves emitted by the ULST may be centered at or around a frequency of 2 MHz. However, the ULST may also operate at other frequencies conventionally used for ultrasonic liquid sensing.

If not indicated otherwise, the acoustic impedances specified throughout the disclosure are specified for the central frequency of the ultrasonic waves to be emitted by the piezoelectric element. The central frequency may be 2 MHz.

The supporting frame being rigid means that the supporting frame may have suitable mechanical properties, such as a stiffness, to provide suitable support of the piezoelectric element when the piezoelectric element is excited to generate ultrasonic waves. The supporting frame may have electrically conductive properties to provide electrical signals and/or an electrical field to the piezoelectric element for excitation and/or sensing.

The piezoelectric element may comprise a single piezoelectric unit or an array of multiple piezoelectric units. The piezoelectric element may be made of or comprise a piezoelectric material, such as lead zirconate titanate (PZT) and/or other piezoelectric ceramic materials. The central section of the piezoelectric element may be a section around a center point of the piezoelectric element in a plane perpendicular to a preferred emission axis, along which the ultrasonic waves are to be emitted. The peripheral section may be one or more sections at the edge of the piezoelectric element surrounding the central section. The supporting frame being adapted to support the peripheral section of the piezoelectric element and to provide the void overlapping with a central section of the piezoelectric element means that the supporting frame supports the piezoelectric element only along the edges but not in the middle. For instance, the peripheral section may extend from each edge of the piezoelectric element over not more than 30%, optionally not more than 20%, optionally not more than 10% of the total width of the piezoelectric element in the respective direction. On the other hand, the peripheral section may extend over at least 2%, optionally at least 5% and optionally at least 7% of the total width of the piezoelectric element in the respective direction on each side. The section of the piezoelectric element being enclosed by the peripheral section may be defines as the central section. The supporting frame may support the peripheral section of the piezoelectric element on each side of the back surface of the piezoelectric element, although according to some optional embodiments the supporting frame may support the piezoelectric element only on two or three sides.

The void is a cavity between the piezoelectric element and the housing, which has a significantly different acoustic impedance than the piezoelectric element and the housing. The void may be empty, i.e. evacuated, or filled with air. According to some embodiments, the void may be at least partly filled with a material having a significantly higher or lower acoustic impedance than the piezoelectric element and the housing. Thus, the void provides an acoustic barrier for ultrasonic waves emitted through the back surface of the piezoelectric element. The void overlapping with the central section of the piezoelectric element means that a projection of the void in a plane perpendicular to the intended emission direction of ultrasonic waves generated by the piezoelectric element overlaps with the central portion of the projection of the piezoelectric element in said plain. In other words, the void is arranged right under the central section of the piezoelectric element.

It is understood that the order of the steps comprised by the method for producing an ultrasonic liquid sensing transducer (ULST) may be changed, as long as an ULST having the features described herein can be obtained. In particular, the order of attaching the first part of the housing and arranging the piezoelectric element may be varied.

The disclosure provides the advantage that a transmission of ultrasonic waves to the back side of the ULST, i.e. via the back surface of the piezoelectric element, may be reduced or even eliminated. Due to the void at the back surface of the piezoelectric element, an emission and transmission of ultrasonic waves off the back surface of the piezoelectric element may be reduced or entirely eliminated, as the void has an acoustic impedance being significantly different from the acoustic impedance of the supporting frame and the housing and, thus, offers suitable properties for blocking or attenuating a transmission of ultrasonic waves.

Reducing or eliminating such undesired transmissions to the opposite direction of an intended emission direction allows reducing undesired measuring artefacts and, hence, improving the signal-to-noise ratio of the ULST. Moreover, avoiding or reducing undesired reflected signals of ultrasonic waves transmitted through the back surface of the piezoelectric elements may allow reducing the technical effort for electronic signal processing and/or signal evaluation and, thus, may reduce the requirements regarding the electronic hardware used for signal processing and signal evaluation.

In addition, the disclosure provides the advantage that the above-mentioned improvements may be achieved with a low manufacturing effort and, hence, at a low cost. In particular, the disclosure may allow providing said improvements with limited structural modifications of the parts of the ULST. Moreover, the disclosure may allow using an ULST according to the disclosure in combination with conventional devices and systems for flow, level, concentration and/or temperature measurement. In addition, the disclosure may allow operating an ULST according to the disclosure with a conventional microprocessor for flow, level, concentration and/or temperature measurements, such as the commercially availble microprocessor E703.15 provided by ELMOS SEMICONDUCTORS SE. The disclosure further provides the advantage that the signal strength of the ultrasonic waves emitted as intended into the front direction is increased, as less or no energy is lost due to undesired emissions to the back direction. Hence, the energy provided as ultrasonic waves by the piezoelectric signals is used in a more efficient manner, as an undesired waste of ultrasonic energy emitted towards the back direction is eliminated or significantly reduced.

The supporting frame may at least partly be made of a rigid metal material. This may ensure suitable mechanical and/or thermal properties for supporting the piezoelectric element, in particular in an agitated state. Moreover, having the supporting frame made of a rigid metal material may allow using the supporting frame for electrically contacting the piezoelectric element and/or for applying an electric field to the piezoelectric element. The rigid metal material may comprise or consist of copper, which offers a high electrical conductivity, a high thermal conductivity and a high mechanical rigidity.

The ULST comprises a housing enclosing the piezoelectric element and at least a part of the supporting frame. The housing may be formed of a single part or comprise two or more parts. The housing may be adapted to offer an ingress protection for the ULST to prevent in particular liquids and fluids from entering the ULST. This may be particularly beneficial as it may allow using the ULST in direct contact with the liquid or fluid, whose level, flow and/or concentration is to be measured. In addition to the ingress protection, the housing may offer a suitable chemical resistance to sustain a direct contact with a liquid and/or fluid chemicals to be measured, such as solvents, gasoline and/or corrosive chemicals.

The housing may in particular cover also the front surface of the piezoelectric element, i.e. the surface intended for emitting ultrasonic waves to be used for the measurement purposes. The section of the housing covering the front surface of the piezoelectric element or a part of it may be adapted to act as a matching layer between the piezoelectric element and the fluid or liquid to be measured. Optionally an additional matching structure may be provided between the front surface of the piezoelectric element and the housing material covering the front surface piezoelectric element to further improve the matching and/or mechanical properties of the ULST. The matching layer with our without the optional matching structure may have a total thickness in forward direction corresponding to a quarter wavelength of the ultrasonic waves generated by the piezoelectric element in the housing material or an odd integer multiple of the quarter wavelength. For instance, a thickness of three quarters of the central wavelength may offer a suitable compromise between compactness and sufficient mechanical stability. The additional matching structure may have an identical or similar acoustic impedance as the housing material. The additional matching structure may be selected to exhibit a high adhesion to the piezoelectric element, which may facilitate attaching the housing material and in particular the matching layer to the front surface of the piezoelectric element. Moreover, the matching structure may serve the purpose of shielding heat generated in the molding step for applying the second part of the housing from the front surface of the piezoelectric element and, thus, reduce stress from the piezoelectric element during the manufacturing process. For instance, the additional matching structure may comprise or consist of a layer of the epoxy adhesive LOCTITE EA E-214-HP, as it is commercially available from HENKEL ADHESIVES TECHNOLOGIES. LOCTITE has an acoustic impedance of about 3,19 Mrayl which is almost identical to the acoustic impedance of PEI, which may be used as a housing material.

In some optional embodiments, the section of the housing covering the front surface of the piezoelectric element may have a thickness being adapted to the central wavelength of the ultrasonic waves emitted by the piezoelectric element. In particular, the section of the housing covering the piezoelectric element may have a total thickness corresponding to a quarter of the wavelength of the ultrasonic waves in the material of the housing or an odd integer multiple thereof. This may facilitate the out-coupling of the ultrasonic waves emitted by the piezoelectric element into the liquid or fluid being in direct contact with the ULST, and in particular with the outer side of the housing. The material of the housing may be selected such as to provide suitable properties regarding ingress protection, chemical resistivity and acoustic properties for transmitting ultrasonic waves. In particular, the housing may at least partly made of a plastic material and may particularly be made of polyetherimide, which offers suitable properties regarding ingress protection, chemical resistivity and suitable acoustic properties.

The void extends from a back surface of the piezoelectric element to a boundary surface of the housing opposing the back surface of the piezoelectric element. In other words, the void may be confined at at least two sides by the back surface of the piezoelectric element and the boundary surface of the housing. This provides the advantage that no further parts are needed for creating the void, as the void is defined by the piezoelectric element and the housing, which are anyways to be provided. Therefore, the production costs can be kept low and no significant modifications are required for providing an ULST having said void.

The housing may comprise a first part comprising the boundary surface. The housing may further comprise a second part enclosing the piezoelectric element, at least a part of the supporting frame and at least a part of the first part of the housing. This provides the advantage that two independent parts of the housing may be optimized and provided in a separate manner. For instance, the first part of the housing may be optimized for confining the void and may be applied in a first manufacturing step, wherein the second part of the housing may be optimized for providing a suitable ingress protection and/or mechanical stability for the ULST and may be applied in a second manufacturing step. Hence, providing a housing comprising several parts may facilitate the manufacturing process and may allow one or more degrees of freedom for adapting the properties of the ULST.

An average acoustic impedance of the void is at least 30 times smaller or at least 30 times higher than an acoustic impedance of the housing. The average acoustic impedance of the void may optionally be at least 100 times smaller or optionally at least 100 times higher than an acoustic impedance of the housing. For instance, the housing may be made of polyetherimide (PEI) having an acoustic impedance of about 3,19 Mrayl (= Mega Rayl; the unit Rayl or Mega Rayl used throughout the disclosure relates to the SI unit based MKS Rayl). When providing the void filled with air, which has an acoustic impedance of about 0,0004 Mrayl, the acoustic impedance of the void is about 8.000 times smaller than the acoustic impedance of the housing offering a high attenuation of ultrasonic waves emitted by the piezoelectric element off the back surface of the piezoelectric element. Moreover, the use of PEI as a material for the housing offers suitable properties as a matching layer covering the front surface of the piezoelectric element, as its acoustic impedance having a value of about 3,0 Mrayl is well bridging between the acoustic impedance of the piezoelectric element (PZT ceramics have an acoustic impedance of about 30 Mrayl) to the liquid (water for instance has an acoustic impedance of about 1,5 Mrayl). This allows an efficient outcoupling of ultrasonic waves from the front surface of the piezoelectric element and an efficient suppression of an emission of ultrasonic waves off the back surface of the piezoelectric element.

The void may be evacuated or essentially filled with air. This ensures a very low acoustic impedance of the void being at least 100 times lower than the acoustic impedance of the housing. Moreover, this facilitates the production of the void, as no additional material and optionally no additional manufacturing steps are required for providing the void, which would otherwise be necessary for filling the void with a material different than the ambient air.

Alternatively, the void may at least partly be filled with one or more of the following materials: a gas, a vapor, a porous material, a foam material. The gas may be different than the ambient air during the production of the ULST. Using such materials may allow precisely adjusting the acoustic impedance of the void to a desired value and in particular establishing a precise ratio between the acoustic impedance of the housing and the acoustic impedance of the void. The materials may be chosen such that the acoustic impedance is at least 30 times or at least 100 times smaller than the acoustic impedance of the housing. For instance, annealed Tungsten may be used as a filling material for the void. Annealed Tungsten having an acoustic impedance of about 101 Mrayl, which is, thus, about 31 times higher than the acoustic impedance of PEI (about 3,19 Mrayl), which may be used as a housing material.

A thickness of the void corresponds to a thickness of a part of the supporting frame supporting the peripheral section of the piezoelectric element. For instance, the supporting frame surrounding the void and the void may flush, i.e. the supporting frame surrounding the void and the void may be adapted such as to have the same thickness. This provides the advantage that the void can be confined by the supporting frame in a plane perpendicular to the intended emission direction of the ultrasonic waves. This may facilitate the production of the ULST as no further parts are required for providing the void.

The void may have for instance a thickness of 2 mm or less, optionally 1,5 mm or less, optionally 1 mm or less and optionally 0,75 mm or less, and/or wherein the void has a thickness of 0,1 mm or more, optionally 0,25 mm or more and optionally 0,5 mm or more. Thus, according to an optional embodiment the void may have a thickness between 0,5 mm and 0,75 mm. Such a thickness may be a suitable compromise between an effective attenuation or elimination of ultrasonic waves emitted off the back surface of the piezoelectric element and a limited spatial extension allowing the production of a compact device.

In the method for producing an ULST, the first part of the housing and the second part of the housing may be made of a plastic material. The first part of the housing is applied in a first injection molding step and the second part of the housing is applied in a second injection molding step. This may provide a low-effort production of the housing and, hence, keep the production costs low.

The method may further comprise a step of filling the recess of the supporting frame prior to arranging the piezoelectric element at the first surface of the supporting frame at least partly with one or more of the following materials: a gas, a vapor, a porous material, a foam material. Alternatively, the method may comprise a step of evacuating the void. These steps may be obsolete when providing the void filled with ambient air present at the manufacturing process.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments will be illustrated in the following with reference to the drawings.
Figures 1A and 1B depict an ultrasonic liquid sensing transducer according to an optional embodiment.
Figures 2A to 2E present different components of the ultrasonic liquid sensing transducer according to the optional embodiment shown in Figures 1A and 1B.
Figure 3 depicts an exemplary method for producing an ultrasonic liquid sensing transducer.
Figures 4A to 4C provide a comparison of different ultrasonic liquid sensing transducers with a conventional ultrasonic liquid sensing transducer.

In the drawings the same reference signs are used for corresponding or similar features in different drawings.

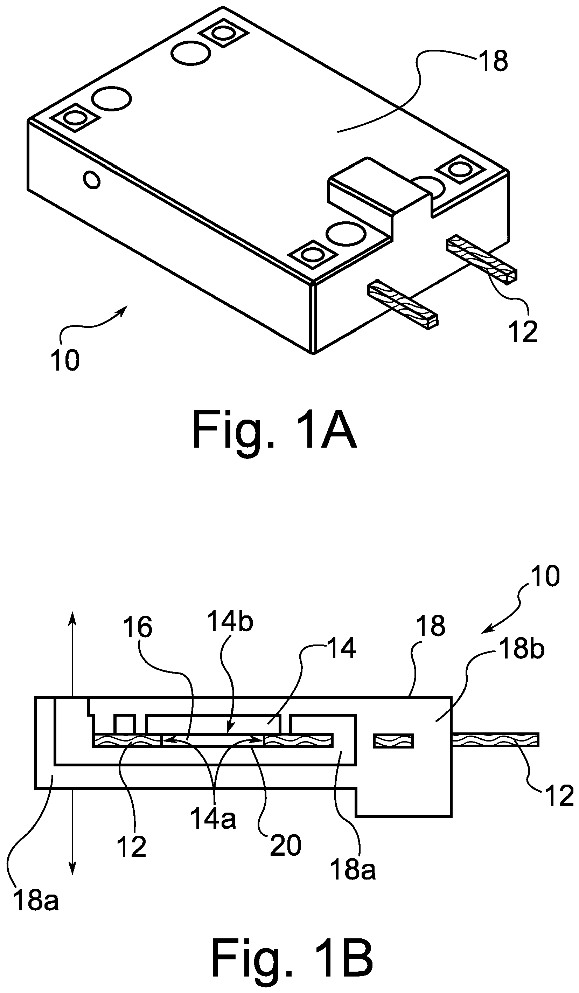

Figures 1A and 1B depict an ultrasonic liquid sensing transducer 10 (ULST) according to an optional embodiment, wherein Figure 1A shows the ULST 10 in a perspective view and Figure 1B shows the ULST in a cross-sectional view. The arrows 100 and 200 indicate the front direction or forward direction 100, in which the emission of ultrasonic waves is intended, and the back direction 200, in which no emission of ultrasonic waves is intended.

The ULST comprises several components, such as a rigid supporting frame 12, which is adapted to mechanically support a piezoelectric element 14 arranged thereon. In order to sufficiently support the piezoelectric element 14 during an excitation of the piezoelectric element 14 for emitting ultrasonic waves, the supporting frame 12 has a high mechanical rigidity. Moreover, the supporting frame 12 may be made of a metal material, such as copper, offering a high electrical conductivity for electrically contacting the piezoelectric element 14 and/or for applying an electrical field to the piezoelectric element 14. Moreover, providing the supporting frame 12 from a metal material having a high thermal conductivity, such as copper, may allow an efficient heat dissipation from the piezoelectric element 14 via the supporting frame 12.

As can be seen in Figure 1B, the piezoelectric element 14 is supported by the supporting frame 12 only in a peripheral section 14a, while the supporting frame 12 leaves a void 16 overlapping with a central section 14b of the piezoelectric element 14. The supporting frame exhibits a respective recess overlapping with the central section 14b of the piezoelectric element 14 to ensure such a support only in the peripheral section 14a.

Moreover, the ULST 10 according to the presented embodiment comprises a housing 18 having a first part 18a and a second part 18b. The first part 18a of the housing 18 is mainly arranged underneath the supporting frame, i.e. on the back side of the supporting frame 12, and provides a boundary surface 20, which confines the void 16 towards the back direction 200. Hence, the void 16 is confined by the back surface of the piezoelectric element 14 towards the front direction 100, by the boundary surface 20 of the first part 18a of the housing 18 towards the back direction 200 and by the supporting frame 12 towards the side directions.

The second part 18b of the housing 18 encloses at least partly the other components, i.e. the piezoelectric element 14, the supporting frame 12 and the first part 18a of the housing 18 to ensure a high level of ingress protection and optionally a high level of chemical resistance. The first part 18a of the housing 18 may be entirely enclosed by the second part 18b or may partly protrude to the outer surface of the housing 18. Moreover, the first part 18a and the second part 18b of the housing may be made of the same material, for instance a plastic material such as polyetherimide, or may be made of different materials. However, the material may be chosen such as to ensure proper ingress protection and optionally chemical resistivity to be usable when immersed in the intended liquid to be measured. The supporting frame 12 may partly protrude from the housing 18 to provide metal pins for electrically contacting the supporting frame 12 from the outer side.

The void 16 provided at the back surface of the piezoelectric element 14 may be filled with air or may be evacuated. Alternatively, the void 16 may be filled with a different kind of gas, a vapor, a porous material and/or a foam material. In any case the void 16 has an acoustic impedance, which strongly differs from the acoustic impedance of the housing material at the central frequency of the ultrasonic waves emitted by the piezoelectric element 14. In particular, the acoustic impedance of the void 16 is at least 30 times higher or smaller and optionally at least 100 times higher or smaller than the acoustic impedance of the housing material. The large difference between the acoustic impedances results in a pronounced step of acoustic behavior at the back surface of the piezoelectric element 14 which efficiently eliminates or attenuates the transmission of ultrasonic waves from the back surface of the piezoelectric element 14 into the void 16. Consequently, the void 16 effectively blocks an emission of ultrasonic waves into the back direction 200 via the back surface of the piezoelectric element 14 and, thus, reduces undesired artefacts which might otherwise originate from back reflections of ultrasonic waves emitted to the back direction 200.

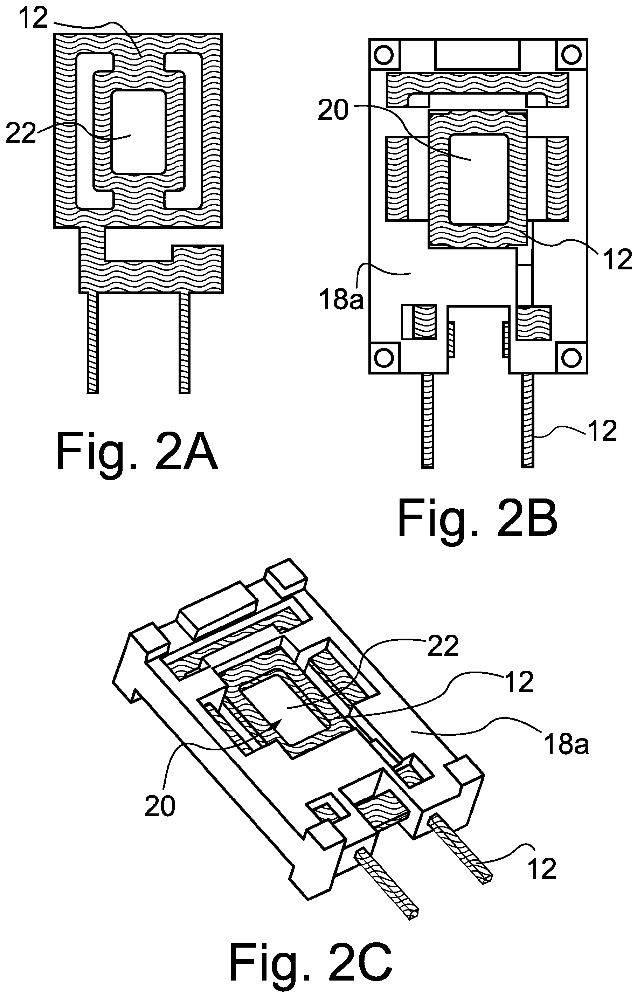

With reference to Figures 2A to 2E the different components of the ULST 10 according to the optional embodiment and the assembly of the ULST 10 is explained.

Figure 2A depicts the supporting frame 12 in a top view. As can be seen, the supporting frame 12 may be made of a single piece of metal offering a frame structure to support the peripheral section 14a of the piezoelectric element 14 and offering a recess 22 for creating the void 16 overlapping with the central section 14b of the piezoelectric element 14 to be supported by the supporting frame 12.

Figures 2B and 2C show the first part 18a of the housing 18 arranged at the supporting frame 12 in a top view and a perspective view, respectively. In some sections the first part 18a of the housing 18 interdigitates with the supporting frame 12 to ensure a defined relative positioning of both components. As can be seen, the first part of the housing 18a covers the recess 22 of the supporting frame 12 and by this provides the boundary surface 20 for confining the void 16 towards the back direction 200. The first part 18a of the housing 18 may evenly cover the recess 22 such that the void 16 is confined flush with the surrounding supporting frame 12.

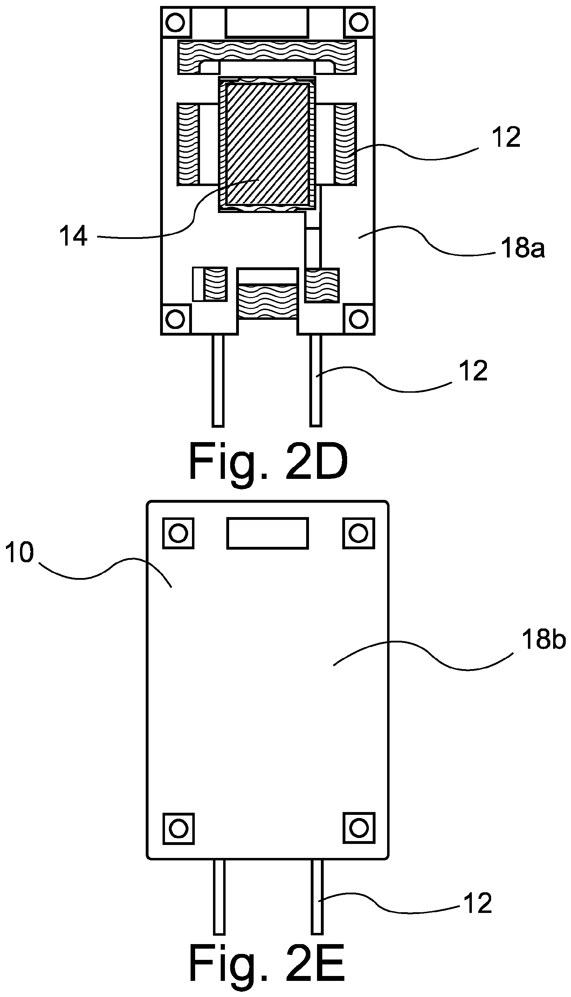

Figure 2D presents the components shown in Figure 2B having the piezoelectric element 14 attached to the supporting frame 12. As can be seen, the piezoelectric element 14 is arranged on the supporting frame 12 such as to entirely cover the recess 22 and to be supported by the supporting frame 12 only in the peripheral section 14a, i.e. along the edges of the piezoelectric element 14. Consequently, the recess 22 located underneath the back surface of the piezoelectric element 14 forms the void 16 being directly adjacent to the back surface of the piezoelectric element 14 and being confined by the piezoelectric element 14, the boundary surface 20 of the first part of the housing 18a and the supporting frame 12.

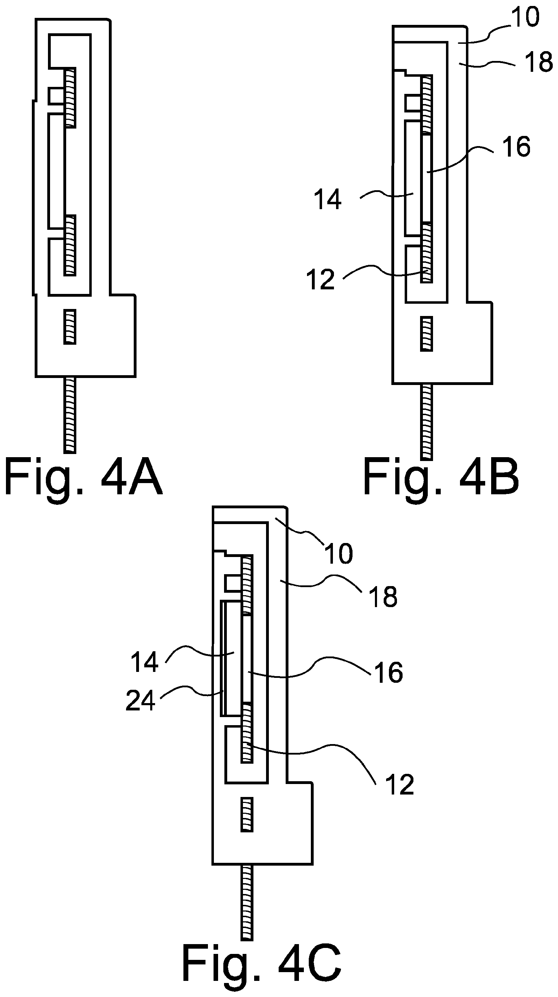

Figure 2E depicts the final ULST 10, wherein the components shown in Figure 2D are enclosed by the second part 18b of the housing 18. According to the presented embodiment, the first part 18a of the housing 18 protrudes to the outer surface of the ULST 10 in some sections, which however is optional. In any case, the housing 18 offers an ingress protection and a chemical resistivity being suitable for operating the ULST 10 in the liquid to be measured by the ULST 10. A section of the second part 18b of the housing 18 covers the piezoelectric element 14 in the front direction 100 and, thus, has the additional function of transmitting the ultrasonic waves emitted by the piezoelectric element 14 into the front direction 14. This section of the housing 18 may serve as a matching layer facilitating the transmission and outcoupling of the emitted ultrasonic waves as well as facilitating the incoupling of received echo signals to be detected by the ULST 10. For this purpose, the housing 18 may be made of a material having an acoustic impedance in a range between the acoustic impedance of the piezoelectric element 14 and the acoustic impedance of the surrounding liquid. Moreover, a thickness of the covering section of the housing 18 may be adapted to facilitate the transmission and coupling of the emitted and received ultrasonic waves. According to an optional embodiment, the ULST 10 may have an additional matching structure (shown in Figure 4C with reference sign 24) between the front surface of the piezoelectric element 14 and the second part 18b of the housing 18, which may further improve the coupling and transmission of ultrasonic waves. The additional matching structure may have the same or a similar acoustic impedance in a range between the acoustic impedance of the piezoelectric element 14 and the acoustic impedance of the material of the housing 18 and thus contribute to the effect of the matching layer. Moreover, the additional matching structure 24 may provide beneficial mechanical properties for protecting the piezoelectric element. The matching layer including an optional matching structure 24 may have a specific thickness with regard to the central wavelength or frequency of the ultrasonic waves to be emitted. For instance, the thickness of the matching layer may be equal to a quarter of the wavelength of the ultrasonic waves in the material of the additional matching layer or an odd integer multiple thereof.

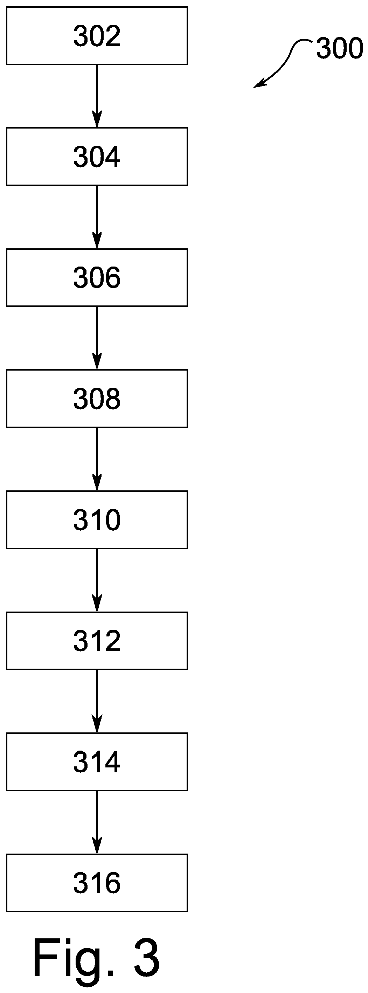

In the following an exemplary method for producing an ULST according to the above-presented optional embodiment is explained with reference to the flow diagram 300 presented in Figure 3.

In a first step 302, a rigid supporting frame 12 is provided, which may be made of copper. The rigid supporting frame 12 has a first surface and a second surface, as well as a recess 22 and a frame structure at least partly surrounding said recess to support a piezoelectric element 14.

In step 304, a first part 18a of a housing 18 is attached to the supporting frame 12. The first part 18a of the housing 18 may be provide by injection molding. The first part 18a of the housing 18 is attached to the second surface of the supporting frame 12, which is the back surface, such that the first part 18a of the housing 18 forms a boundary surface 20 overlapping with and covering the recess 22 of the supporting frame 12.

In step 306, a piezoelectric element 14 is arranged with its back surface at the first surface, i.e. the front surface, of the supporting frame 12 such that the frame structure of the supporting frame 12 supports a peripheral section 14a of the piezoelectric element 14 and the recess 22 of the supporting frame 12 overlaps with a central section 14b of the piezoelectric element 14, wherein the boundary surface 20 of the first part 18a of the housing 18, the back surface of the piezoelectric element 14 and the supporting frame 12 enclose a void 16 extending from the back surface of the piezoelectric element 14 to the boundary surface 20 of the first part of the housing 18a.

In step 308, the piezoelectric element and/or the supporting frame 12 may be electrically contacted. This may be achieved by welding wires to the supporting frame 12, i.e. to contact pins of the supporting frame protruding from the housing 18.

In step 310, the function of the piezoelectric element 14 and/or the ULST 10 may be tested and/or characterized by carrying out respective measurements.

In step 312, a second part 18b of the housing 18 is provided such as to enclose at least partly the piezoelectric element 14, the first part 18a of the housing 18 and at least a part of the supporting frame12. The second part 1b of the housing 18 may be provided in a further injection molding step. The second part 18b of the housing 18 may be made of the same material as the first part 18a of the housing 18.

In step 314, an end-of-line test may be carried out to test the correction function of the ULST 10.

In step 316, if the ULST 10 passed the test in step 314, the ULST 10 may be packaged.

With reference to Figures 4A to 4C a comparison of different ULSTs is provided, wherein Figure 4A shows a conventional ULST having no void provide at the back surface of the piezoelectric element, Figure 4B shows an ULST 10 according to the embodiment detailed with reference to Figures 1A to 2E having the void 16 filled with air, and Figure 4C depicts an ULST 10 according to a further embodiment having an additional matching structure 24 arranged at the front surface of the piezoelectric element 14 but being otherwise identical to the ULST 10 shown in Figure 4B. For the sake of the comparison and to demonstrate the beneficial effect of the void 16, the conventional ULST shown in Figure 4A has been provided by preparing the ULST in the same manner as the ULST 10 shown in Figure 4B with the only difference that the void 16 is filled up with housing material of the first part 18a of the housing 18.

The characteristics of various samples of each type of ULST, as presented in Figures 4A to 4C have been measured, wherein the ULSTs were operated using an E703.15 microprocessor of ELMOS SEMICONDUCTOR SE. For the measurement, the voltage signal of a reflection in a distance of 5 cm in front direction 100 from the ULST has been measured and compared to a possible artefact voltage signal generated by a reflection from the back direction 200.

The conventional ULST shown in Figure 4A measured a voltage signal from the reflection of the front direction in the range from 0,9 V to 1,66 V wherein the artefact voltage signal caused by the reflection from the back direction were measured to be in the range from 1,42 V to 2,88 V. It is to be noted that the artefact voltage signal from the back reflection is very pronounced and even stronger than the actual signal obtained from the reflection in front direction 100.

In contrast, the ULST 10 according to an embodiment of the disclosure, as presented in Figure 4B, did not exhibit any artefact voltage signal caused by an undesired reflection from the back direction. Consequently, the related artefact voltage signal is 0 V. The measured signal obtained from the desired reflection in front direction was measured to be in a range from 2,22 V to 3,26 V. Hence, the void 16 and the ULST 10 according to the disclosure not only effectively block undesired reflections from the back direction and, thus, eliminate artefact voltage signals, but also increase the signal strength for measurements in front direction, which further improves the signal-to-noise ratio.

Also the ULST 10 presented in Figure 4C did not suffer from any artefact voltage signals from reflections in back direction, which resulted in absent artefact voltage signals of 0 V. The voltage signals from the reflections in front direction were in a range from 1,94 V to 3,3 V and, thus, even higher than the signals measured with the ULST shown in Figure 4B. Hence, the additional matching structure 24 allows to further improve the signal strength of the voltage signals obtained from reflections in front direction. The matching structure was made of the epoy adhesive LOCTITE EA E-214HP and applied to the front surface of the piezoelectric element 14 prior to attach the second part 18b of the housing 18. this allows shielding the heat generated during the injection molding process for attaching the second part 18b of the housing 18 from the piezoelectric element 14 and may further enhance the adhesion of the matching layer, which in this case is formed by the matching structure 24 and the second part 18b of the housing 18 to the piezoelectric element 14. The total thickness of the matching layer corresponds to about 0,92 mm, which corresponds to about three quarters of the wavelength of the ultrasonic waves. A thickness of 0,92 mm offers a suitable mechanical stability for ingress protection and for mechanical protection of the piezoelectric element.

### List of reference signs

- 10: Ultrasonic liquid sensing transducer
- 12: supporting frame
- 14: piezoelectric element
- 14a: peripheral section of piezoelectric element
- 14b: central section of piezoelectric element
- 16: void
- 18: housing
- 18a: first part of housing
- 18b: second part of housing
- 20: boundary surface
- 22: recess
- 24: matching structure

- 100: front direction
- 200: back direction

## Claims

1. Ultrasonic liquid sensing transducer (10) comprising:
- a rigid supporting frame (12);
- a piezoelectric element (14) mounted on the supporting frame (12); and
- a housing (18) enclosing at least partly the piezoelectric element (14) and the supporting frame (12);
wherein the supporting frame (12) is adapted to support a peripheral section (14a) of the piezoelectric element (14) and to provide a void (16) overlapping with a central section (14b) of the piezoelectric element (14),
**characterized in that**
- the void (16) extends from a back surface of the piezoelectric element (14) to a boundary surface (20) of the housing (18) opposing the back surface of the piezoelectric element (14);
- a thickness of the void (16) corresponds to a thickness of a part of the supporting frame (12) supporting the peripheral section (14a) of the piezoelectric element (14), and
- an average acoustic impedance of the void (16) is at least 30 times smaller or at least 30 times higher than an acoustic impedance of the housing (18).

2. Ultrasonic liquid sensing transducer (10) according to claim 1, wherein the supporting frame (12) is at least partly made of a rigid metal material.

3. Ultrasonic liquid sensing transducer (10) according to claim 1 or 2, wherein the housing (18) is at least partly made of a plastic material and is optionally made of polyetherimide.

4. Ultrasonic liquid sensing transducer (10) according to any one of the preceding claims, wherein the housing (18) comprises a first part (18a) comprising the boundary surface (20), and wherein the housing (18) further comprises a second part (18b) enclosing the piezoelectric element (14), at least a part of the supporting frame (12) and at least a part of the first part (18a) of the housing (18).

5. Ultrasonic liquid sensing transducer (10) according to any one of the preceding claims, wherein the average acoustic impedance of the void (16) is at least 100 times smaller or optionally at least 100 times higher than an acoustic impedance of the housing (18).

6. Ultrasonic liquid sensing transducer (10) according to any one of the preceding claims, wherein the void (16) is evacuated or essentially filled with air.

7. Ultrasonic liquid sensing transducer (10) according to any one of claims 1 to 5, wherein the void (16) is at least partly filled with one or more of the following materials: a gas, a vapor, a porous material, a foam material.

8. Ultrasonic liquid sensing transducer (10) according to any one of the preceding claims, wherein the void (16) has a thickness of 2 mm or less, optionally 1,5 mm or less, optionally 1 mm or less and optionally 0,75 mm or less, and/or wherein the void (16) has a thickness of 0,1 mm or more, optionally 0,25 mm or more and optionally 0,5 mm or more.

9. Ultrasonic liquid level sensing system comprising at least one ultrasonic liquid sensing transducer (10) according to any one of the preceding claims.

10. Method for producing an ultrasonic liquid sensing transducer (10), the method comprising:
- providing a rigid supporting frame (12) having a first surface, a second surface and having a recess (22) and a frame structure at least partly surrounding the recess (22);
- attaching a first part (18a) of a housing (18) to the second surface of the supporting frame (12) such that the first part (18a) of the housing (18) forms a boundary surface (20) overlapping with the recess (22) of the supporting frame (12);
- arranging a piezoelectric element (14) with its back surface at the first surface of the supporting frame (12) such that the frame structure of the supporting frame (12) supports a peripheral section (14a) of the piezoelectric element (14) and the recess (22) of the supporting frame (12) overlaps with a central section (14b) of the piezoelectric element (14), wherein the boundary surface (20) of the first part of the housing (18), the back surface of the piezoelectric element (14) and the supporting frame (12) enclose a void (16) extending from the back surface of the piezoelectric element (14) to the boundary surface of the first part (18a) of the housing (18) and having an average acoustic impedance of the void (16) is at least 30 times smaller or at least 30 times higher than an acoustic impedance of the housing (18);
- providing a second part (18b) of the housing (18) at least partly enclosing the piezoelectric element (14), the first part (18a) of the housing (18) and the supporting frame (12).

11. Method according to claim 10, wherein the first part (18a) of the housing (18) and the second part (18b) of the housing (18) are made of a plastic material and wherein the first part (18a) of the housing (18) is applied in a first injection molding step and the second part (18b) of the housing (18) is applied in a second injection molding step.

12. Method according to claim 10 or 11, further comprising filling the recess (22) of the supporting frame (12) prior to arranging the piezoelectric element (14) at the first surface of the supporting frame (12) at least partly with one or more of the following materials: a gas, a vapor, a porous material, a foam material.

## Patentansprüche

1. Ultraschall-Flüssigkeitssensorwandler (10), umfassend:
einen starren Tragrahmen (12);
ein piezoelektrisches Element (14), das auf dem Tragrahmen (12) montiert ist; und
ein Gehäuse (18), das das piezoelektrische Element (14) und den Tragrahmen (12) mindestens teilweise umschließt;
wobei der Tragrahmen (12) dazu angepasst ist, einen peripheren Abschnitt (14a) des piezoelektrischen Elements (14) zu tragen und einen Hohlraum (16) bereitzustellen, der einen zentralen Abschnitt (14b) des piezoelektrischen Elements (14) überlappt,
**dadurch gekennzeichnet, dass**
sich der Hohlraum (16) von einer Rückseitenfläche des piezoelektrischen Elements (14) zu einer Grenzfläche (20) des Gehäuses (18), die der Rückseitenfläche des piezoelektrischen Elements (14) gegenüberliegt, erstreckt;
eine Dicke des Hohlraums (16) einer Dicke eines Teils des Tragrahmens (12) entspricht, der den peripheren Abschnitt (14a) des piezoelektrischen Elements (14) trägt, und
eine durchschnittliche akustische Impedanz des Hohlraums (16) mindestens 30 Mal kleiner oder mindestens 30 Mal höher ist als eine akustische Impedanz des Gehäuses (18).

2. Ultraschall-Flüssigkeitssensorwandler (10) nach Anspruch 1, wobei der Tragrahmen (12) mindestens teilweise aus einem starren Metallmaterial hergestellt ist.

3. Ultraschall-Flüssigkeitssensorwandler (10) nach Anspruch 1 oder 2, wobei das Gehäuse (18) mindestens teilweise aus einem Kunststoffmaterial hergestellt ist und optional aus Polyetherimid hergestellt ist.

4. Ultraschall-Flüssigkeitssensorwandler (10) nach einem der vorhergehenden Ansprüche, wobei das Gehäuse (18) einen ersten Teil (18a), umfassend die Grenzfläche (20), umfasst und wobei das Gehäuse (18) ferner einen zweiten Teil (18b) umfasst, der das piezoelektrische Element (14), mindestens einen Teil des Tragrahmens (12) und mindestens einen Teil des ersten Teils (18a) des Gehäuses (18) umschließt.

5. Ultraschall-Flüssigkeitssensorwandler (10) nach einem der vorhergehenden Ansprüche, wobei die durchschnittliche akustische Impedanz des Hohlraums (16) mindestens 100 Mal kleiner oder optional mindestens 100 Mal höher ist als eine akustische Impedanz des Gehäuses (18).

6. Ultraschall-Flüssigkeitssensorwandler (10) nach einem der vorhergehenden Ansprüche, wobei der Hohlraum (16) evakuiert oder im Wesentlichen mit Luft gefüllt ist.

7. Ultraschall-Flüssigkeitssensorwandler (10) nach einem der Ansprüche 1 bis 5, wobei der Hohlraum (16) mindestens teilweise mit einem oder mehreren der folgenden Materialien gefüllt ist: einem Gas, einem Dampf, einem porösen Material, einem Schaummaterial.

8. Ultraschall-Flüssigkeitssensorwandler (10) nach einem der vorhergehenden Ansprüche, wobei der Hohlraum (16) eine Dicke von 2 mm oder weniger, optional 1,5 mm oder weniger, optional 1 mm oder weniger und optional 0,75 mm oder weniger aufweist und/oder wobei der Hohlraum (16) eine Dicke von 0,1 mm oder mehr, optional 0,25 mm oder mehr und optional 0,5 mm oder mehr aufweist.

9. Ultraschall-Flüssigkeitspegelsensorsystem, umfassend mindestens einen Ultraschall-Flüssigkeitssensorwandler (10) nach einem der vorhergehenden Ansprüche.

10. Verfahren zum Erzeugen eines Ultraschall-Flüssigkeitssensorwandlers (10), wobei das Verfahren Folgendes umfasst:
Bereitstellen eines starren Tragrahmens (12), der eine erste Oberfläche, eine zweite Oberfläche aufweist und eine Ausnehmung (22) und eine Rahmenstruktur aufweist, die die Ausnehmung (22) mindestens teilweise umgibt;
derartiges Anbringen eines ersten Teils (18a) eines Gehäuses (18) an der zweiten Oberfläche des Tragrahmens (12), dass der erste Teil (18a) des Gehäuses (18) eine Grenzfläche (20) bildet, die die Ausnehmung (22) des Tragrahmens (12) überlappt;
derartiges Anordnen eines piezoelektrischen Elements (14) mit seiner Rückseitenfläche an der ersten Oberfläche des Tragrahmens (12), dass die Rahmenstruktur des Tragrahmens (12) einen Umfangsabschnitt (14a) des piezoelektrischen Elements (14) trägt und die Ausnehmung (22) des Tragrahmens (12) einen mittleren Abschnitt (14b) des piezoelektrischen Elements (14) überlappt, wobei die Grenzfläche (20) des ersten Gehäuseteils (18), die Rückseitenfläche des piezoelektrischen Elements (14) und der Tragrahmen (12) einen Hohlraum (16) umschließen, der sich von der Rückseitenfläche des piezoelektrischen Elements (14) zu der Grenzfläche des ersten Teils (18a) des Gehäuses (18) erstreckt und eine durchschnittliche akustische Impedanz des Hohlraums (16) aufweist, die mindestens 30 Mal kleiner oder mindestens 30 Mal höher ist als eine akustische Impedanz des Gehäuses (18);
Bereitstellen eines zweiten Teils (18b) des Gehäuses (18), der das piezoelektrische Element (14), den ersten Teil (18a) des Gehäuses (18) und den Tragrahmen (12) mindestens teilweise umschließt.

11. Verfahren nach Anspruch 10, wobei der erste Teil (18a) des Gehäuses (18) und der zweite Teil (18b) des Gehäuses (18) aus einem Kunststoffmaterial hergestellt sind und wobei der erste Teil (18a) des Gehäuses (18) in einem ersten Spritzgießschritt aufgebracht wird und der zweite Teil (18b) des Gehäuses (18) in einem zweiten Spritzgießschritt aufgebracht wird.

12. Verfahren nach Anspruch 10 oder 11, ferner umfassend ein Füllen der Ausnehmung (22) des Tragrahmens (12) vor dem Anordnen des piezoelektrischen Elements (14) an der ersten Oberfläche des Tragrahmens (12) mindestens teilweise mit einem oder mehreren der folgenden Materialien: einem Gas, einem Dampf, einem porösen Material, einem Schaummaterial.

## Revendications

1. Transducteur ultrasonique de détection de liquide (10) comprenant :
- un cadre de support rigide (12) ;
- un élément piézoélectrique (14) monté sur le cadre de support (12) ; et
- un boîtier (18) renfermant au moins partiellement l'élément piézoélectrique (14) et le cadre de support (12) ;
dans lequel le cadre de support (12) est conçu pour supporter une section périphérique (14a) de l'élément piézoélectrique (14) et pour fournir un vide (16) chevauchant une section centrale (14b) de l'élément piézoélectrique (14),
**caractérisé en ce que**
- le vide (16) se prolonge d'une surface arrière de l'élément piézoélectrique (14) à une surface limite (20) du boîtier (18) opposée à la surface arrière de l'élément piézoélectrique (14) ;
- une épaisseur du vide (16) correspond à une épaisseur d'une partie du cadre de support (12) supportant la section périphérique (14a) de l'élément piézoélectrique (14), et
- une impédance acoustique moyenne du vide (16) est au moins 30 fois plus petite ou au moins 30 fois plus élevée qu'une impédance acoustique du boîtier (18).

2. Transducteur ultrasonique de détection de liquide (10) selon la revendication 1, dans lequel le cadre de support (12) est au moins partiellement constitué d'un matériau métallique rigide.

3. Transducteur ultrasonique de détection de liquide (10) selon la revendication 1 ou 2, dans lequel le boîtier (18) est au moins partiellement constitué d'un matériau plastique et est éventuellement constitué de polyétherimide.

4. Transducteur ultrasonique de détection de liquide (10) selon l'une quelconque des revendications précédentes, dans lequel le boîtier (18) comprend une première partie (18a) comprenant la surface limite (20), et dans lequel le boîtier (18) comprend également une seconde partie (18b) renfermant l'élément piézoélectrique (14), au moins une partie du cadre de support (12) et au moins une partie de la première partie (18a) du boîtier (18).

5. Transducteur ultrasonique de détection de liquide (10) selon l'une quelconque des revendications précédentes, dans lequel l'impédance acoustique moyenne du vide (16) est au moins 100 fois plus petite ou éventuellement au moins 100 fois plus élevée qu'une impédance acoustique du boîtier (18).

6. Transducteur ultrasonique de détection de liquide (10) selon l'une quelconque des revendications précédentes, dans lequel le vide (16) est évacué ou essentiellement rempli d'air.

7. Transducteur ultrasonique de détection de liquide (10) selon l'une quelconque des revendications 1 à 5, dans lequel le vide (16) est au moins partiellement rempli d'un ou de plusieurs des matériaux suivants : un gaz, une vapeur, un matériau poreux, un matériau en mousse.

8. Transducteur ultrasonique de détection de liquide (10) selon l'une quelconque des revendications précédentes, dans lequel le vide (16) a une épaisseur de 2 mm ou moins, éventuellement de 1,5 mm ou moins, éventuellement de 1 mm ou moins et éventuellement de 0,75 mm ou moins, et/ou dans lequel le vide (16) a une épaisseur de 0,1 mm ou plus, éventuellement de 0,25 mm ou plus et éventuellement de 0,5 mm ou plus.

9. Système ultrasonique de détection de niveau de liquide comprenant au moins un transducteur ultrasonique de détection de liquide (10) selon l'une quelconque des revendications précédentes.

10. Procédé de fabrication d'un transducteur ultrasonique de détection de liquide (10), le procédé comprenant :
- la fourniture d'un cadre de support rigide (12) ayant une première surface, une seconde surface et ayant un évidement (22) et une structure de cadre entourant au moins partiellement l'évidement (22) ;
- la fixation d'une première partie (18a) d'un boîtier (18) à la seconde surface du cadre de support (12) de sorte que la première partie (18a) du boîtier (18) forme une surface limite (20) chevauchant l'évidement (22) du cadre de support (12) ;
- l'agencement d'un élément piézoélectrique (14) avec sa surface arrière au niveau de la première surface du cadre de support (12) de sorte que la structure de cadre du cadre de support (12) supporte une section périphérique (14a) de l'élément piézoélectrique (14) et que l'évidement (22) du cadre de support (12) chevauche une section centrale (14b) de l'élément piézoélectrique (14), dans lequel la surface limite (20) de la première partie du boîtier (18), la surface arrière de l'élément piézoélectrique (14) et le cadre de support (12) renferment un vide (16) se prolongeant de la surface arrière de l'élément piézoélectrique (14) à la surface limite de la première partie (18a) du boîtier (18) et ayant une impédance acoustique moyenne du vide (16) qui est au moins 30 fois plus petite ou au moins 30 fois plus élevée qu'une impédance acoustique du boîtier (18) ;
- la fourniture d'une seconde partie (18b) du boîtier (18) renfermant au moins partiellement l'élément piézoélectrique (14), la première partie (18a) du boîtier (18) et le cadre de support (12).

11. Procédé selon la revendication 10, dans lequel la première partie (18a) du boîtier (18) et la seconde partie (18b) du boîtier (18) sont constituées d'un matériau plastique et dans lequel la première partie (18a) du boîtier (18) est appliquée dans une première étape de moulage par injection et la seconde partie (18b) du boîtier (18) est appliquée dans une seconde étape de moulage par injection.

12. Procédé selon la revendication 10 ou 11, comprenant également le remplissage de l'évidement (22) du cadre de support (12) avant l'agencement de l'élément piézoélectrique (14) au niveau de la première surface du cadre de support (12) au moins partiellement avec un ou plusieurs des matériaux suivants : un gaz, une vapeur, un matériau poreux, un matériau en mousse.
